# EUROPÄISCHE PATENTANMELDUNG

(11) **EP 3 794 957 A1**
(43) Veröffentlichungstag der Anmeldung: **24.03.2021**
(21) Anmeldenummer: 20187157.1
(22) Anmeldetag: 21.03.2017
(51) Int. Cl.: A23L 3/16, A23L 3/22, A23L 33/00, A23B 4/005

(54) **VERFAHREN ZUR HERSTELLUNG EINES LEBENSMITTELS, INSBESONDERE EINES KINDERNAHRUNGSERZEUGNISSES AUS MEHREREN ZUTATEN**

(30) Priorität: 21.03.2016 DE 102016003327
(62) Teilanmeldung aus: 17162025.5
(71) Anmelder: Hipp & Co, 6072 Sachseln (CH)
(72) Erfinder: Frithjof, Tomusch, 4810 Gmunden (AT)
(74) Vertreter: Schiweck Weinzierl Koch Patentanwälte Partnerschaft mbB

(57) **Zusammenfassung**

Bei einem Verfahren zur Herstellung eines Lebensmittels, insbesondere eines Kindernahrungserzeugnisses, aus mehreren Zutaten, werden die Zutaten einzeln haltbar gemacht, aseptisch zusammengeführt und aseptisch abgefüllt. Vorteilhaft ist es, wenn mindestens eine Zutat erwärmt, bei einer Temperatur zwischen 120 °C und 130 °C für weniger als 5 min gekocht, auf unter 100 °C abgekühlt, in ein Gebinde abgefüllt wird und das Gebinde auf unter 40 °C Kerntemperatur abgekühlt wird, wobei die eine weitere Zutat erst nach dem Kochen zugegeben wird.

## Beschreibung

Die Erfindung betrifft ein Verfahren zur Herstellung eines Kindernahrungserzeugnisses aus mehreren Zutaten. Insbesondere betrifft die Erfindung eine Kleinkindernährung. Dies betrifft Kindernahrungserzeugnisse für Kinder von 0 bis 36 Monate, das heißt Kindernahrungserzeugnisse für die Stufen 1 bis 4.

Derartige Kindernahrungserzeugnisse werden in Glas- und Kunststoffverpackungen angeboten. Dabei ist in der Regel ein Behälter wie eine Kunststoffschale oder ein Glasbehälter mit einer Abdeckung wie einer Folie oder einem Deckel versehen.

Zur industriellen Herstellung von Kindernahrungsmitteln wurde vorgeschlagen, die Zutaten getrennt vorzukochen, zu mischen und anschließend einer UHT-Sterilisationsanlage zuzuführen. Das sterilisierte Lebensmittel wird danach abgefüllt. Dadurch sollte erreicht werden, dass bei der Erhitzung möglichst wenig unerwünschte Nebenprodukte entstehen. Es hat sich jedoch herausgestellt, dass durch die hohe Hitzebelastung während des UHT-Verfahrens die vorher gemischten Zutaten einer hohen thermischen Belastung ausgesetzt werden, wobei unerwünschte Nebenprodukte entstehen. Ein vor der UHT-Behandlung vorgesehener Mischvorgang führt darüber hinaus dazu, dass während des Mischens und vor allem während der UHT-Behandlung in Platten- oder Röhrenwärmetauschem die Zutaten mechanischen Scherkräften ausgesetzt werden, worunter die Konsistenz des Lebensmittels leidet.

Der Erfindung liegt daher die Aufgabe zugrunde, ein gattungsgemäßes Verfahren zur Herstellung eines Lebensmittels vorzuschlagen, mit dem die thermischen und mechanischen Belastungen des Lebensmittels minimiert werden können. Diese Aufgabe wird mit einem gattungsgemäßen Verfahren gelöst, bei dem mehrere Zutaten einzeln haltbar gemacht werden, aseptisch zusammengeführt und aseptisch abgefüllt werden.

Dadurch, dass die Zutaten wie beispielsweise Gemüse, Cerealien und Fleisch einzeln haltbar gemacht werden, kann für jede Zutat ein spezielles Verfahren für die Sterilisation verwendet werden. Dabei können die Parameter des Sterilisationsverfahrens auf die jeweilige Zutat genau abgestimmt werden.

Die Zutaten werden erst nach der Sterilisation aseptisch zusammengeführt und aseptisch abgefüllt. Dabei können die Zutaten auch erst während der Abfüllung im Gebinde zusammengeführt werden.

Die Zutaten werden somit individuell schonend behandelt und zwischen der Sterilisation der einzelnen Zutaten und der Abfüllung wird für sterile Verhältnisse gesorgt, damit, nachdem die Zutaten einzeln haltbar gemacht wurden, weiter bis zum Ende des Abfüllungsprozesses sterile Bedingungen herrschen.

Vorteilhaft ist es, wenn mehrere Zutaten vor dem Abfüllen unter sterilen Bedingungen gemischt werden. Dadurch entsteht ein homogenes abfüllbares Lebensmittel, das besonders einfach abgefüllt werden kann.

Um die thermische Belastung des Lebensmittels möglichst niedrig zu halten, wird vorgeschlagen, dass die Zutaten vor dem Mischen auf unter 100 °C abgekühlt werden. Je nach Lebensmittel kann es jedoch auch vorteilhaft sein, die Zutaten erst während des Mischens auf unter 100 °C abzukühlen. Das Abkühlen auf unter 100 °C vor dem Abfüllen des Lebensmittels verhindert ein Nachkochen des Lebensmittels im Füller. Ein Nachkochen kann leicht beim Abfüllen zu Verschmutzungen führen. Dies ist besonders relevant bei Lebensmitteln, bei deren Abfüllung im Gebinde vor dem Verschließen ein leichtes Vakuum angelegt wird. Dies ist häufig bei der Abfüllung in Gläser der Fall. Das Lebensmittel sollte vorzugsweise vor dem Abfüllen sogar auf unter 95 °C abgekühlt sein.

Da alle Zutaten steril vorbehandelt sind, ist es auch möglich, die weitere Zutat erst nach dem Abkühlen auf unter 100 °C zuzumischen. Eine schonende schnelle Behandlung wird dadurch erzielt, dass die weitere Zutat erst unmittelbar vor dem Zumischen sterilisiert wird.

Für den Sterilisationsprozess können unterschiedliche Verfahren verwendet werden. Vorteilhaft ist es, wenn die weitere Zutat vor dem Zumischen im Röhrenwärmetauscher sterilisiert wird. Dies ermöglicht ein kontinuierliches Sterilisieren und vorzugsweise auch ein kontinuierliches Zumischen.

Schonender ist der Prozess in der Regel, wenn die weitere Zutat vor dem Zumischen bei 120 °C bis 130 °C steril gekocht wird. Dies betrifft einen Kochvorgang im Behälter und nicht in einem Röhrenwärmetauscher.

Insbesondere für besonders flüssige Medien wird vorgeschlagen, dass die weitere Zutat vor dem Zumischen durch Filtration sterilisiert wird.

Dementsprechend wird vorgeschlagen, dass die weitere Zutat eine wässrige Lösung oder ein Öl ist.

Die weitere Zutat kann jedoch auch ein Fleischprodukt oder ein Fischprodukt sein. Das Verfahren erlaubt insbesondere bei derartigen Produkten eine besonders stückige Zugabe und eine Vorbehandlung, die genau auf das Fleisch- oder Fischprodukt abgestimmt ist.

In der Praxis hat sich ein Verfahren bewährt, bei dem mindestens eine Zutat erwärmt, bei einer Temperatur zwischen 120 °C und 130 °C für weniger als 5 min gekocht, auf unter 100 °C abgekühlt, dann in ein Gebinde abgefüllt wird und das Gebinde auf unter 40 °C abgekühlt wird, wobei die eine weitere Zutat erst nach dem Kochen hinzugegeben wird. Dabei ist eine Vorbehandlung sinnvoll, bei der die zumindest eine Zutat vor dem Kochen Temperaturen zwischen 60 °C und 90 °C für eine Zeit von 35 min ausgesetzt wird. Diese Vorbehandlung erfolgt bevorzugt in einem anderen Behandlungsgefäß.

Der Erfindung liegt die Erkenntnis zugrunde, dass es besonders vorteilhaft ist, wenn die Komponenten eines Lebensmittels einzeln haltbar gemacht und dann aseptisch zusammengeführt werden. Die Komponentenentkeimung kann dabei durch Hitze und durch Entkeimungs- oder Steril-Filtration erfolgen.

Ein Sonderfall ist der Brüdenabzug beim Steril-Kochen. Dabei lassen sich unerwünschte Komponenten wie Schadstoffe und Fehlaromen austreiben. In einer Destillationskolonne können aus den Brüden die unerwünschten Komponenten aus der Dampfphase abgetrennt werden, während die positiven Komponenten, wie beispielsweise Aromaträger, dem Produkt wieder zugeführt werden. Eine Steril-Filtration der den Lebensmitteln zugeführten Phase aus den Brüden ist in der Regel nicht notwendig, da während der Brüdenbehandlung sterile Bedingungen vorliegen.

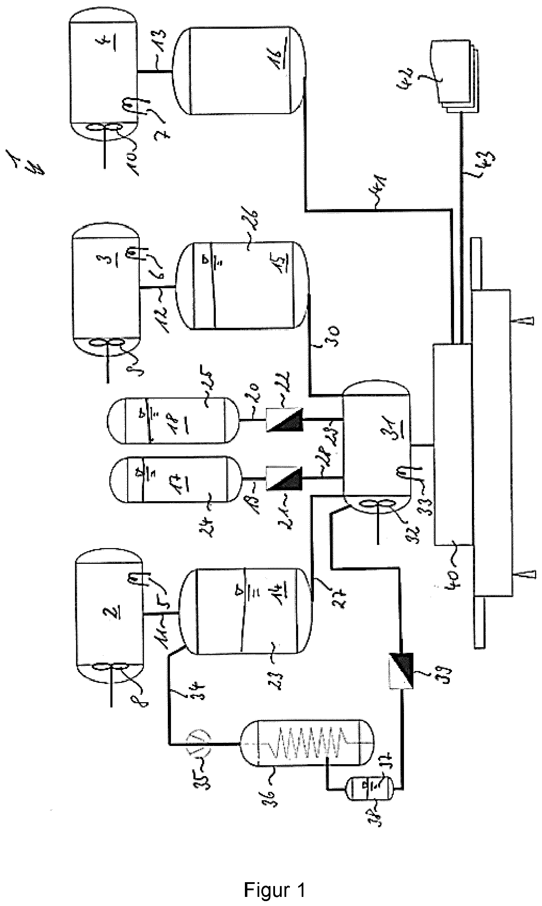

Ein Ausführungsbeispiel ist in der Zeichnung dargestellt und wird im Folgenden näher beschrieben. Es zeigt:
- die einzige Figur: eine Anlage zur beispielhaften Zusammenführung verschiedener Komponenten.

Die in der Figur gezeigte Anlage 1 zur Durchführung des Verfahrens weist beispielhaft drei Behälter 2, 3 und 4 auf, in denen unterschiedliche Komponenten des Lebensmittels vorbehandelt werden können. Hierfür können die Behälter Heizeinrichtungen 5, 6, 7 und Mischreinrichtungen 8, 9 und 10 aufweisen. Dies ermöglicht es, die Komponenten getrennt voneinander zu erhitzen oder vorzukochen und zu mischen.

Aus den Behältern 2, 3 und 4 werden die Komponenten über die Leitungen 11, 12, 13 in Sterilisationsbehälter 14, 15, 16 überführt, in denen in einem kontinuierlichen Verfahren oder vorzugweise einem Batch-Verfahren die Komponenten getrennt voneinander sterilisiert werden können. Als Sterilisationsbehälter kann somit auch ein Röhrenwärmetauscher vorgesehen werden.

Zwei weitere Behälter 17 und 18 dienen dazu, eine wässrige bzw. eine ölhaltige Komponente vorzuhalten, die über Leitungen 19 bzw. 20 jeweils einem Sterilfilter 21 bzw. 22 zugeführt werden können. Die Komponenten 23 bis 26 werden über Leitungen 27, 28, 29 und 30 einem Sterilmischer 31 zugeführt. Der Sterilmischer hat ein Rührwerk 32 und kann auch mit einer Temperiereinrichtung 33 ausgestattet sein.

Der Sterilisationsbehälter 14 hat einen Brüdenabzug 34, der über eine Vakuumpumpe 35 mit einer Fraktionierkolonne 36 verbunden ist. Dort werden im Rahmen einer fraktionierten Destillation werthaltige Aromasubstanzen dem Brüden entnommen und dem Sterilmischer 31 zugeführt. Diese Aromasubstanzen 37 können in einem Behälter 38 aufgefangen und in einem Sterilfilter 39 nochmals sterilisiert werden. Nachdem die einzelnen Komponenten im Sterilmischer 31 gemischt sind, werden sie einem aseptischen Füller 40 zugeführt, in dem die abgekühlten Komponenten in Gebinde (nicht gezeigt) abgefüllt werden. Die Temperiereinrichtung 33 im Sterilmischer 31 kann zur Erhitzung und auch zur Abkühlung der Komponenten dienen.

Im Füller kann eine weitere Komponente aus dem Behälter 16 über die Leitung 41 in die Gebinde abgefüllt werden. Außerdem können weitere entkeimte Komponenten 42 über die Leitung 43 zum Füller gefördert und dort dem Gebinde beigegeben werden.

Für die Herstellung eines Lebensmittels aus Gemüse, Nudeln und Fleisch werden im Behälter 2 verschiedene Gemüsearten wie beispielsweise pürierte Erbsen, ganze Maiskörner und Karottenwürfel mit einer Kantenlänge von durchschnittlich 10 mm vermischt und vorgekocht.

Im Behälter 3 werden 35 mm lange Spiralnudeln im Wasser mit Salz gekocht und im Behälter 4 werden Rindfleisch, Tomatenmark und Zwiebeln angeröstet. Im Behälter 17 ist als wässrige Lösung eine sterilfiltrierbare Vitamin C-Lösung und im Behälter 18 ist als sterilfiltrierbare Ölkomponente Speiseöl mit Vitamin E-Zugabe und Kräuteraroma.

Die Komponenten aus den Behältern 14, 15, 17 und 18 werden im Sterilmischer 31 miteinander vermischt und dem Füller 40 zugeführt. Dort wird zunächst die Mischung aus dem Behälter 31 abgefüllt und anschließend wird die Mischung aus dem Behälter 16 in das gleiche Gebinde gegeben. Als Alternative kann die Mischung aus dem Behälter 16 aus Rindfleisch, Tomatenmark und Zwiebeln im Sterilmischer 31 vorbehandelt, mit den übrigen Komponenten gemischt und zusammen mit den übrigen Komponenten im Füller 40 abgefüllt werden.

Als weitere entkeimte Komponenten 42 können vorsterilisierte, aseptisch verpackte Fleischbällchen im Aseptikraum des Füllers 40 über eine Sterilschleuse zudosiert und mittels eines Taschenfüllers in das Gebinde gegeben werden.

Dies ermöglicht ein getrenntes Abfüllen getrennt vorbehandelter Komponenten, wodurch eine individuelle Behandlung der unterschiedlichen Komponenten gewährleistet wird.

In einem weiteren Ausführungsbeispiel wird im Behälter 2 aus Milch, Rundkomreis und Zucker eine Milchreiszubereitung hergestellt. Als weitere Komponente wird dem Behälter 4 aus Milch, Stärke, Zucker und Kakao eine Milchcreme mit Kakaogeschmack hergestellt. Die Komponenten werden getrennt voneinander in den Behältern 14 bzw. 16 steril gekocht.

Als wässrige Lösung ist im Behälter 17 ein Apfelaroma mit wässrigem Zimtauszug und gelöstem Vitamin B2 vorgesehen und als Ölkomponente ist im Behälter 18 ein Speiseöl mit Butteraroma und Vitamin D-Zugabe.

Mit der Fraktionierkolonne 36 kann im Milchreis der Kochgeschmack reduziert werden.

Als zusätzliche Komponente 42 kann im Füller eine vorsterilisierte, aseptisch verpackte Kirschsoße zudosiert werden. Hierzu wird eine Sterilschleuse (nicht gezeigt) am Füller verwendet. Alle Komponenten werden somit am Füller als sterile Komponenten im Füller in die Gebinde abgefüllt.

Die beiden Produktbeispiele sind nur Ausführungsvorschläge, um exemplarisch aufzuzeigen, wie verschiedene Komponenten getrennt voneinander vorbehandelt oder gekocht werden können, um anschließend miteinander vermischt oder auch getrennt voneinander im Füller in ein Gebinde abgefüllt zu werden.

Die Erfindung wird ferner durch die folgenden Ausführungsformen beschrieben
1. Verfahren zur Herstellung eines Kindernahrungserzeugnisses, aus mehreren Zutaten, bei dem mehrere Zutaten einzeln haltbar gemacht werden, aseptisch zusammengeführt und aseptisch abgefüllt werden, ***dadurch gekennzeichnet, dass*** eine erste und eine zweite Zutat in unterschiedlichen Behältern als verschiedene Komponenten getrennt voneinander vorbehandelt oder gekocht werden, die erste Zutat vor dem Zumischen bei 120 °C bis 130 °C in dem einem Behälter steril gekocht wird und eine dritte Zutat eine wässrige Lösung oder ein Öl ist, die vor dem Zumischen durch Filtration sterilisiert werden.
2. Verfahren nach Ausführungsform 1, ***dadurch gekennzeichnet, dass*** die erste und die zweite Zutat in unterschiedlichen Behältern auf das jeweilige Produkt abgestimmt steril gekocht werden.
3. Verfahren nach Ausführungsform 1 oder 2, *dadurch **gekennzeichnet, dass*** die erste Zutat eine besonders stückige Zugabe ist.
4. Verfahren nach einem der vorhergehenden Ausführungsformen, ***dadurch gekennzeichnet, dass*** die erste Zutat ein Fleischprodukt oder ein Fischprodukt ist.
5. Verfahren nach einem der vorhergehenden Ausführungsformen, ***dadurch gekennzeichnet, dass*** das Kindernahrungserzeugnis Karottenwürfel mit einer Kantenlänge von durchschnittlich 10 mm aufweist.
6. Verfahren nach einem der vorhergehenden Ausführungsformen, ***dadurch gekennzeichnet, dass*** für ein Lebensmittels aus Gemüse, Nudeln und Fleisch in einem Behälter verschiedene Gemüsearten wie beispielsweise pürierte Erbsen, ganze Maiskörner und Karottenwürfel mit einer Kantenlänge von durchschnittlich 10 mm vermischt und vorgekocht werden.
7. Verfahren nach einem der vorhergehenden Ausführungsformen, ***dadurch gekennzeichnet, dass*** die dritte Zutat eine wässrige Vitaminlösung, ein Öl oder ein Aroma ist.
8. Verfahren nach einem der vorhergehenden Ausführungsformen, ***dadurch gekennzeichnet, dass*** die dritte Zutat eine sterilfiltrierbare Vitamin C-Lösung, eine sterilfiltrierbare Ölkomponente wie Speiseöl mit Vitamin E-Zugabe oder ein Kräuteraroma ist. Verfahren nach einem der vorhergehenden Ansprüche, ***dadurch gekennzeichnet, dass*** mehrere Zutaten vor dem Abfüllen unter sterilen Bedingungen gemischt werden.
9. Verfahren nach Ausführungsform 8, ***dadurch gekennzeichnet, dass*** die Zutaten vor dem Mischen auf unter 100 °C abgekühlt werden.
10. Verfahren nach Ausführungsform 8, ***dadurch gekennzeichnet, dass*** die Zutaten während des Mischens auf unter 100 °C abgekühlt werden.
11. Verfahren nach einem der vorhergehenden Ausführungsformen, ***dadurch gekennzeichnet, dass*** die weitere Zutat erst nach dem Abkühlen auf unter 100 °C zugemischt wird.
12. Verfahren nach einem der vorhergehenden Ausführungsformen, ***dadurch gekennzeichnet, dass*** eine weitere Zutat unmittelbar vor dem Zumischen sterilisiert wird.
13. Verfahren nach einem der vorhergehenden Ausführungsformen, ***dadurch gekennzeichnet, dass*** eine Zutat vor dem Zumischen im Röhrenwärmetauscher sterilisiert wird.
14. Verfahren nach einem der vorhergehenden Ausführungsformen, ***dadurch gekennzeichnet, dass*** eine Zutat vor dem Zumischen bei 120 °C bis 130 °C steril gekocht wird.
15. Verfahren nach einem der vorhergehenden Ausführungsformen, ***dadurch gekennzeichnet, dass*** mindestens eine Zutat erwärmt, bei einer Temperatur zwischen 120 °C und 130 °C für weniger als 5 min gekocht, auf unter 100 °C abgekühlt, in ein Gebinde abgefüllt wird und das Gebinde auf unter 40 °C Kerntemperatur abgekühlt wird, wobei eine weitere Zutat erst nach dem Kochen zugegeben wird.
16. Verfahren nach einem der vorhergehenden Ausführungsformen, ***dadurch gekennzeichnet, dass*** zumindest eine Zutat vor dem Kochen bei Temperaturen zwischen 60 und 90 °C und Zeiten zwischen 5 und 30 min vorbehandelt wird.

## Patentansprüche

1. Verfahren zur Herstellung eines Kindernahrungserzeugnisses für Kinder von 0 bis 36 Monate, aus mehreren Zutaten, bei dem mehrere Zutaten einzeln haltbar gemacht werden, aseptisch zusammengeführt und aseptisch abgefüllt werden, ***dadurch gekennzeichnet, dass*** eine erste und eine zweite Zutat in unterschiedlichen Behältern als verschiedene Komponenten getrennt voneinander vorbehandelt oder gekocht werden, die erste Zutat vor dem Zumischen bei 120 °C bis 130 °C in dem einem Behälter steril gekocht wird und eine dritte Zutat eine wässrige Lösung oder ein Öl ist, die vor dem Zumischen durch Filtration sterilisiert wird, wobei die erste und die zweite Zutat in unterscheidlichen Behältern auf das jeweilige Produkt abgestimmt steril gekocht werden und wobei die erste Zutat ein Fleischprodukt oder ein Fischprodukt ist.

2. Verfahren nach Anspruch 1, ***dadurch gekennzeichnet, dass*** die dritte Zutat eine wässrige Vitaminlösung, ein Öl oder ein Aroma ist.

3. Verfahren nach Anspruch 1 oder 2, ***dadurch gekennzeichnet, dass*** die dritte Zutat eine sterilfiltrierbare Vitamin C-Lösung, eine sterilfiltrierbare Ölkomponente wie Speiseöl mit Vitamin E-Zugabe oder ein Kräuteraroma ist.

4. Verfahren nach einem der vorhergehenden Ansprüche, ***dadurch gekennzeichnet, dass*** mehrere Zutaten vor dem Abfüllen unter sterilen Bedingungen gemischt werden.

5. Verfahren nach Anspruch 4, ***dadurch gekennzeichnet, dass*** die Zutaten vor dem Mischen auf unter 100 °C abgekühlt werden.

6. Verfahren nach Anspruch 4, ***dadurch gekennzeichnet, dass*** die Zutaten während des Mischens auf unter 100 °C abgekühlt werden.

7. Verfahren nach einem der vorhergehenden Ansprüche, ***dadurch gekennzeichnet, dass*** das Erzeugnis vor dem Abfüllen auf unter 95 °C abgekühlt ist.

8. Verfahren nach einem der vorhergehenden Ansprüche, ***dadurch gekennzeichnet, dass*** eine weitere Zutat erst nach dem Abkühlen auf unter 100 °C zugemischt wird.

9. Verfahren nach einem der vorhergehenden Ansprüche, ***dadurch gekennzeichnet, dass*** eine weitere Zutat unmittelbar vor dem Zumischen sterilisiert wird.

10. Verfahren nach Anspruch 9, ***dadurch gekennzeichnet, dass*** die weitere Zutat unmittelbar vor dem Zumischen durch Filtration sterilisiert wird.

11. Verfahren nach einem der vorhergehenden Ansprüche, ***dadurch gekennzeichnet, dass*** eine Zutat vor dem Zumischen im Röhrenwärmetauscher sterilisiert wird.

12. Verfahren nach einem der Ansprüche 1-10, ***dadurch gekennzeichnet, dass*** eine Zutat vor dem Zumischen bei 120 °C bis 130 °C steril gekocht wird.

13. Verfahren nach einem der vorhergehenden Ansprüche, ***dadurch gekennzeichnet, dass*** mindestens eine Zutat erwärmt, bei einer Temperatur zwischen 120 °C und 130 °C für weniger als 5 min gekocht, auf unter 100 °C abgekühlt, in ein Gebinde abgefüllt wird und das Gebinde auf unter 40 °C Kerntemperatur abgekühlt wird, wobei eine weitere Zutat erst nach dem Kochen zugegeben wird.

14. Verfahren nach einem der vorhergehenden Ansprüche, ***dadurch gekennzeichnet*, *dass*** zumindest eine Zutat vor dem Kochen bei Temperaturen zwischen 60 und 90 °C und Zeiten zwischen 5 und 30 min vorbehandelt wird.
